# EUROPEAN PATENT SPECIFICATION

(11) **EP 0 661 431 B1**
(45) Date of publication and mention of the grant of the patent: **29.04.1998**
(21) Application number: 94120848.0
(22) Date of filing: 28.12.1994
(51) Int. Cl.: F02D 41/14, F02D 35/00, F02D 9/02, F02D 13/02, F02M 69/04, F02B 17/00, F02M 61/18

(54) **Method for supplying air and injecting fuel into a combustion chamber of an internal combustion engine, in particular a two-cycle engine and internal combustion engine**
Verfahren zur Zuführung von Luft und zum Einspritzen von Kraftstoff in einen Brennraum einer Brennkraftmaschine, insbesondere Zweitaktbrennkraftmaschine, und Brennkraftmaschine
Procédé d'alimentation en air et d'injection de carburant dans la chambre de combustion d'un moteur à combustion interne, notamment un moteur à deux temps, et moteur à combustion interne

(30) Priority: 28.12.1993 JP 336428/93
(43) Date of publication of application: 05.07.1995
(73) Proprietor: YAMAHA HATSUDOKI KABUSHIKI KAISHA, Iwata-shi Shizuoka-ken, 438 (JP)
(72) Inventor: Takahiro, Takeo Yoshida, Iwata-shi, Shizuoka-ken 438 (JP); Suzuki, Ryoichi Hirai, Iwata-shi, Shizuoka-ken 438 (JP)
(74) Representative: Grünecker, Kinkeldey, Stockmair & Schwanhäusser Anwaltssozietät

(56) References cited:
- EP-A- 0 227 935
- EP-A- 0 302 045
- EP-A- 0 413 432
- WO-A-87/00575
- DE-A- 1 934 882
- FR-A- 2 163 256
- GB-A- 723 972
- GB-A- 2 199 617
- GB-A- 2 215 398
- US-A- 3 977 367
- US-A- 4 207 856
- US-A- 4 550 701
- US-A- 4 616 621
- US-A- 4 686 941
- US-A- 4 974 565
- US-A- 5 249 557
- PATENT ABSTRACTS OF JAPAN vol. 9 no. 162 (M-394) ,6 July 1985 & JP-A-60 035114 (MAZDA KK) 22 February 1985,

## Description

The present invention relates to a method for supplying air and injecting fuel into a combustion chamber of an internal combustion engine, in particular two cycle engine, said combustion chamber being defined through a part of a cylinder head supporting a spark plug, and a top surface of a piston slidably accommodated in a cylinder bore of a cylinder block, whereby fuel is injected proportionally to load and an excessive amount of air is supplied to said combustion chamber by means of an air intake valve system under at least low load conditions for producing lean air-fuel mixture in said combustion chamber under said condition and to an internal combustion engine, in particular two-cycle engine, having a cylinder block defining at least one cylinder bore slidably accommodating a piston therein, a cylinder head mounted to the cylinder block and partially defining a combustion chamber together with a top surface of the piston, said cylinder head supporting a spark plug for igniting a combustible charge injected into the combustion chamber by a fuel injection means, and an air supplying device to supply air in the combustion chamber, said fuel injection means has a first fuel injection nozzle for injecting a first flow of fuel directed towards the spark plug and at least one further nozzle for simultaneously injecting a second flow of fuel directed toward an intermediate region of the combustion chamber between the spark plug and the piston, whereby the amount of the first flow of fluid is smaller than the amount of the second flow of fuel.

The above-indicated method is known from document US-A-4,616,621, whereas the above-mentioned internal combustion engine is known from document WO 87/00505.

It has been discovered that both exhaust gas emissions and fuel economy improve when stratified combustion occurs in two-cycle engines operating under low speed, low load conditions.

The above mentioned stratified combustion can be achieved in low speed, low load operating ranges by filling the cylinder with air and performing a localized fuel injection toward the spark plug, and then igniting the rich air/fuel mixture in the vicinity of that zone, however, the prior art uses a fuel injection nozzle and a high injection angle so that the injected fuel is dispersed as a mist throughout the whole zone.

However, in the above-mentioned method for supplying air and injecting fuel into a combustion chamber of an internal combustion engine, injected fuel is dispersed and misted over the entire zone, causing fuel to be scattered to zones beyond the combustion zone and unburned gas to be generated, resulting in increased HC (hydro-carbon) emissions and poor fuel economy.

Accordingly, it is an objective of the present invention to provide an improved method for supplying air and injecting fuel into a combustion chamber of an internal combustion engine, in particular a two-stroke cycle engine, which allows stable combustion and improved exhaust emission characteristics and fuel economy during engine operation at least during low load conditions.

According to the present invention, this objective is solved for a method as indicated above in that simultaneously to introducing an excessive amount of air during at least low load conditions, a first fuel injection valve performs a localized injection of fuel towards the spark plug and ignition of an immediately combustible air/fuel-mixture starts ahead of top dead center position of the piston, during at least low load conditions a second flow of fuel is directed towards an intermediate region between the spark plug and the piston in the combustion chamber while simultaneously a first flow of fuel is directed towards the spark plug, the amount of fuel directed toward the spark plug is smaller than the amount of fuel directed towards said intermediate region.

Moreover, document WO 87/00505 discloses an internal combustion engine the fuel injection valve of which is disposed within the cylinder block. Because of this, there is a relatively long distance between the fuel injection nozzle and the combustion chamber close to the spark plug so that a powerful and therefore costly fuel pump is required in order to reach the first flow of fuel to the combustion chamber. However, this results further to the fact that the fuel injection is dispersed and misted over the entire zone, causing fuel to be scattered to zones beyond the combustion zone and unburned gas to be generated, resulting in decreased HC (hydro-carbon) emissions and poor fuel economy.

Therefore, it is a further objective of the present invention to improve an internal combustion engine as indicated above, in particular a two-stroke cycle engine, in its operational characteristics, specifically in the characteristics of the combustion taking place in the combustion chamber of the engine as well as during at least low load conditions.

According to the present invention, this objective is solved for an internal combustion engine as indicated above in that said fuel injection means comprises a first fuel injection valve attached to a side wall of the cylinder head and is adapted to inject the second flow of fuel during at least low load conditions, that said air supply device is adapted to supply an excessive amount of air under at least low load conditions, whereby simultaneously to said excessive supply of air said fuel injection means injects said first flow of fuel, whereby the ignition of an immediately combustible air/fuel mixture is startable ahead of a top dead center position of said piston.

According to an embodiment of the present invention, under low load conditions an air introducing subvalve which, at that time is driven by a separate drive means pens to introduce air excessively whereas under increasing load said subvalve is rapidly moved towards its closing direction while simultaneously a main valve gradually opens further and, under further increasing load, said main and subvalves are operated jointly connected by a mechanical linkage.

According to another embodiment of the present invention, at a timing the first flow of fuel reaches the spark plug a volume of the combustion chamber at the side of the spark plug being associated to said flow of fuel directed to the spark plug being smaller than a volume of the combustion chamber being associated to the second flow of fuel.

Preferably, a plurality of fuel injection nozzles may be provided which inject fuel directed to the foregoing intermediate space and, when the fuel directed towards the spark plug reaches the spark plug, the combustion chamber is divided into two areas wherein the volume of the combustion chamber on the spark plug side associated to the flow of fuel directed towards the spark plug is smaller than the volume of the combustion chamber on the side opposite to the spark plug associated to the fuel injection towards the intermediate region between the spark plug and the top surface of the piston of the combustion chamber.

This invention prevents excess fuel from being dispersed to the region outside the combustion range, thereby holding down the generation of unburned gases and the HC content in the exhaust gases and improving fuel economy.

The fuel injected toward the spark plug creates a combustible air/fuel fixture in that zone, but since the amount of fuel injected is constrained, the fuel mixture does not exceed the combustible range, as it would if it were overly rich, and, when the spark plug fires, the air/fuel mixture is immediately ignited, the flame broadening to reach the intermediate region between the spark plug and the piston, where most of the fuel is injected, to heat and vaporize same.

Then the vaporized fuel takes in the oxygen around it to form a combustible air/fuel mixture, and when this combustible mixture is burned, the resulting flame vaporizes the fuel surrounding it, and that fuel in turn, takes in oxygen and becomes a combustible air/fuel mixture in a repetitious process wherein the fuel injected to the intermediate zone takes in oxygen and is burned slowly in a consecutive manner and while maintaining a low temperature. Stable, stratified combustion is thus possible and the amount of NOₓ in the exhaust gases is kept low.

In addition, this fuel which is injected into the intermediate region is compressed by the rising pressure of the previously burned fuel, and thereby is dispersed on the side of the combustion chamber opposite the spark plug side where it forms a combustible air/fuel mixture, but since the volume of the combustion chamber on the opposite side of the plug in this invention is greater than the volume on the plug side, there is gentle progression of the ignition and combustion of the combustible air/fuel mixture, allowing a stable stratified combustion when operating in the low rpm, low load ranges.

Other preferred embodiments of the method according to the present invention are laid down in the further subclaims.

In the following the present invention will be explained in greater detail by means of several embodiments thereof in conjunction with accompanying drawings, wherein:

**Figure 1** is a block diagram showing the structure of a two-cycle engine equipped with a first embodiment of the fuel injection device of this invention.

**Figure 2** is a vertical sectional view of the two-cycle engine.

**Figure 3** is a sectional view along line A-A of Figure 2.

**Figure 4** is a sectional view along line B-B of Figure 2.

**Figure 5** is a figure to explain the air volume control means.

**Figure 6** is an enlarged partial section of the C area of Figure 1.

**Figure 7** is a view in the direction of arrow D of Figure 6.

**Figure 8** is a sectional view along line E-E of Figure 7.

**Figure 9** is an enlarged partial section of the F area of Figure 1.

**Figure 10** is a timing chart showing the fuel injection timing during stratified combustion.

**Figure 11** is a graph of air/fuel mixture concentration distribution within the cylinder.

**Figure 12** is a graph showing the changes in aperture area of the air intake port as a function of the main valve aperture (engine load).

**Figure 13** is a diagrammatic sectional view of the principal parts of a second embodiment of this invention on a two-cycle engine.

**Figure 14** is a sectional view along line N-N of Figure 13.

**Figure 15** is a diagrammatic sectional view of the principal parts of a third embodiment of the invention (similar to Figure 14) , and

Figures 16a -16c are diagrams of an advancement of combustion in the combustion chamber and firing timings of fuel injected by different nozzles to different areas under excess of air.

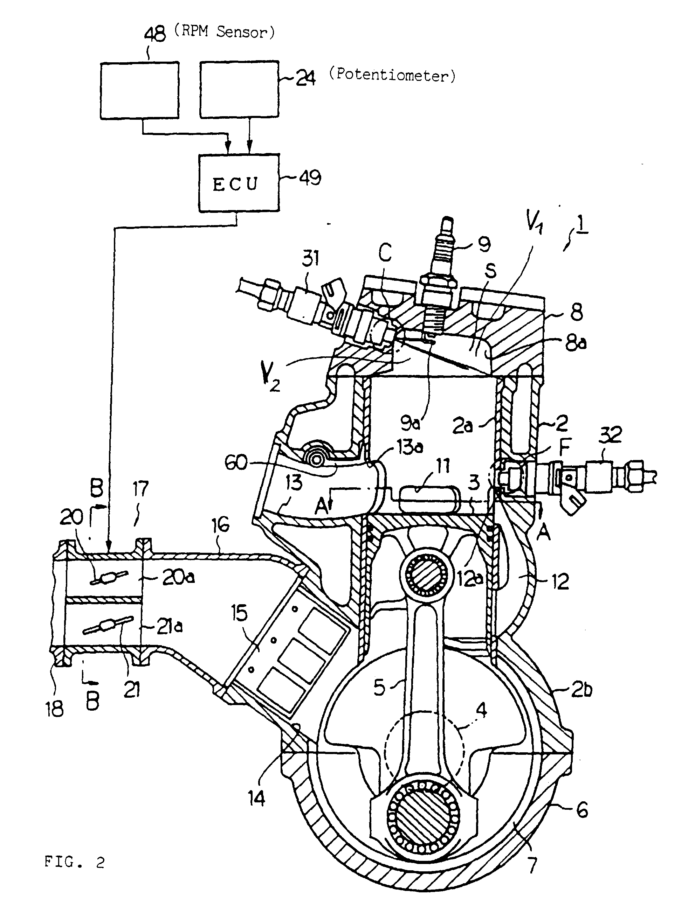

First the basic structure of the two cycle engine will be described with reference to Figure 2.

The two-cycle engine 1 in this embodiment is one which performs stratified combustion when operating in the low rpm, low load ranges. Piston 3 is installed free to slide up and down inside cylinder 2a formed in the cylinder block 2. This piston 3 is linked to the crankshaft 4, which is disposed lengthwise in a direction perpendicular to the plane of the paper in Figure 2, by means of a connecting rod 5. A lower crankcase 6 which contains the crank chamber 7 is fastened to the upper crankcase 2b, which was formed integrally with cylinder block 2 is. Said crank chamber 7 houses the foregoing crankshaft 4, which is rotatably supported therein.

In addition, a cylinder head 8 is fastened over the top surface of the above mentioned cylinder block 2, and a concave combustion zone 8a is formed in said cylinder head 8. The combustion chamber S is defined by said concave combustion zone 8a and the aforementioned piston 3. A spark plug 9 is threaded in the top of the cylinder head 8, and the electrode area 9a of said spark plug is situated within the above mentioned combustion chamber S.

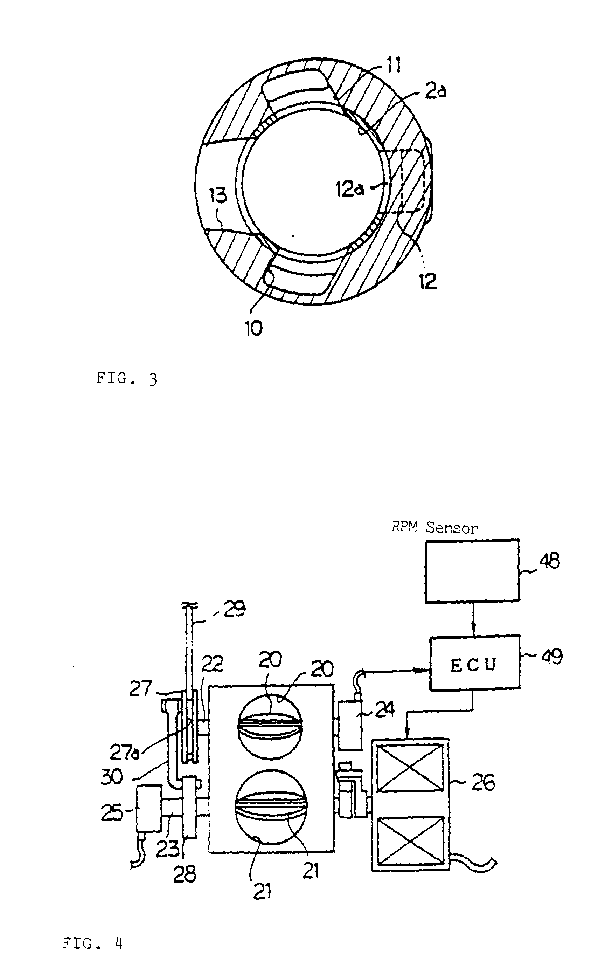

Here, as shown in Figure 3, two primary scavenging ports 10, 11, one auxiliary scavenging port 12, as well as an exhaust port 13, are formed in the foregoing cylinder block 2. The above mentioned two primary scavenging ports 10, 11 are situated on opposite sides of the cylinder. The auxiliary scavenging port 12 is similarly situated opposite the exhaust port 13. Further, the upper edge of the opening 12a of the auxiliary scavenging port 12 opens at the top of the cylinder 2a, and as a result, blowout of the scavenging flow through the exhaust port 13 is nearly non-existent.

On the other hand, an air introduction opening 14, which opens into the crank chamber 7, is present in the lower part of the foregoing cylinder block 2. Said air introduction opening 14 is equipped with a reed valve which permits air to flow only into the crank chamber 7.

In addition, the above mentioned air introduction opening 14 is connected to an air intake pipe 16, and said air intake pipe 16 further connects with the air intake manifold 18 through an air volume control device 16.

In controlling the amount of air intake for the crank chamber 7 through the air intake opening 14 and the reed valve 15, the above mentioned air volume control device acts on the following operational parameters, namely the magnitude of accelerator displacement (engine load) when the accelerator device 19 is operated (not shown), and the engine rpm. Said devices comprises air intake ports 20a, and 21a, which are situated one above the other and which are opened and closed, respectively, by a main valve 20 and a sub-valve 21. The main valve 20 and sub-valve 21 are held in the normally-closed position by a force application means not shown in the figures.

Also, as shown in Figure 4, the main valve 20 and sub-valve 21 are actuated by respective drive shafts 22, 23, and are fitted with potentiometers 24, 25 detecting the aperture of these valves 20, 21. The drive shaft 23 of sub-valve 21 is linked to a motor 26.

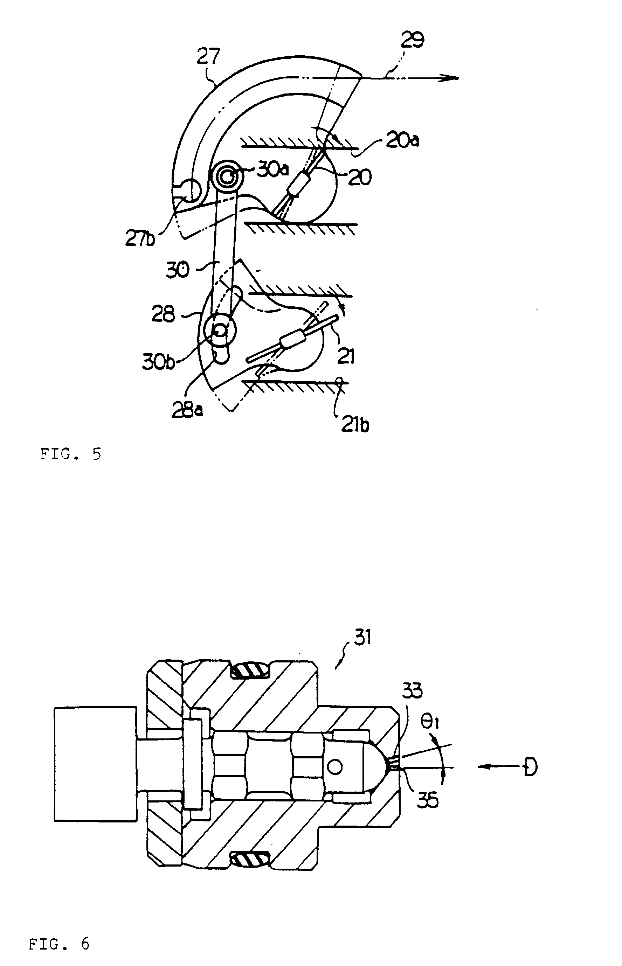

As illustrated in Figure 5, one end of the drive shaft 22 for the main valve 20 is linked to a first pivoting member 27, and one end of the drive shaft 23 for the sub-valve 21 is linked to a second pivoting member 28. A groove 27a (see Figure 4) and an engagement hole 27b (see Figure 5) have been formed in the outer circumferential area of the above mentioned first pivoting member 27, and a throttle wire 29 wraps around groove 27a and links it with the previously mentioned accelerator device 19. The other end of said throttle wire 29 attaches in the foregoing engagement hole 27b of the first pivoting member 27.

As additionally shown in Figure 5, a linkrod 30 is linked to the first pivoting member 27 and to the second pivoting member 28. One end 30a of said linkrod 30 is pivotally attached in freely rotating manner to the first pivoting member 27, while the other end 30b slidably enters the arcuate guide slot 28a formed in the second pivoting member 28.

As shown in Figure 2, a first fuel injection valve 31 is attached to the side wall of the foregoing cylinder head 8 to supply fuel primarily for the stratified combustion during low rpm, low load operations, but also to supplement the fuel supply in other operating ranges. In addition, a second fuel injection valve 32 is mounted on the side wall of the foregoing cylinder block 2 which supplies premixed air-and-fuel for middle and high load operating ranges.

As illustrated in Figures 6 through 8, the above mentioned first fuel injection valve consists of a single, relatively large-diameter fuel injection nozzle 33, and three, relatively small diameter fuel injection nozzles 34, 35, 36. The fuel injection nozzle 35 lies on the axial center line, while the fuel injection nozzles 34, 36 lie on either side of the fuel injection nozzle 35.

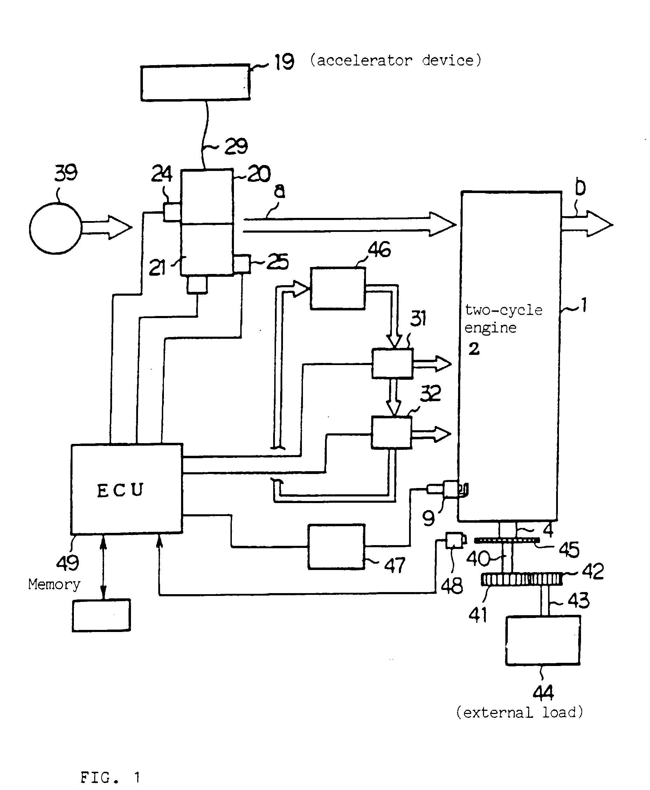

As additionally illustrated by Figure 6, the foregoing fuel injection nozzle 33 tilts upward at an angle θ₁ from the axial line in the vertical sectional view, and as shown in Figure 1, fuel from said nozzle 33 is sprayed toward the spark plug 9 thereby creating the injection fuel flow q₁.

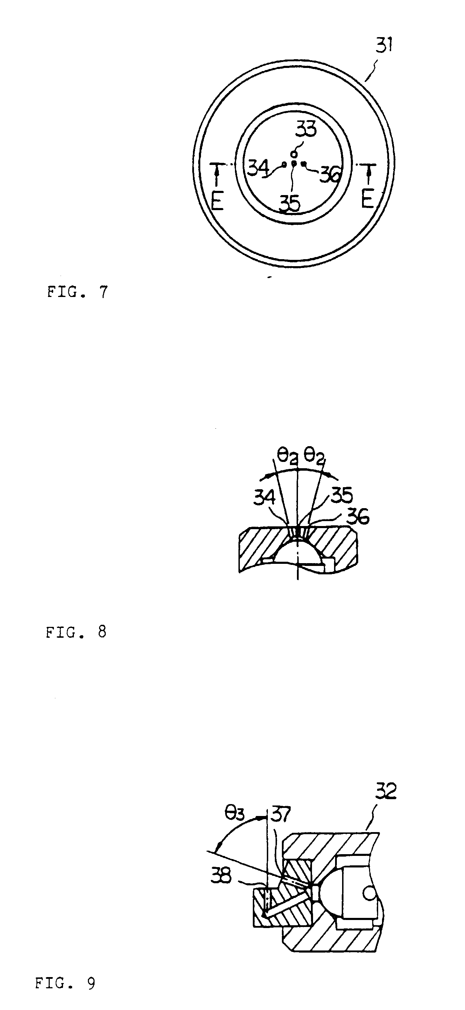

On the other hand, as shown in Figure 8, the fuel injection nozzles 34, 36 on the above mentioned both sides subtend respective angles θ₂ from the axial line in the horizontal sectional view, so that the three injection nozzles 34-36 inject fuel into the intermediate range of the combustion chamber S between the spark plug 9 and the piston 3 as is shown in Figure 1, thereby creating injection fuel flows q₂.

In the present embodiment, the diameters of the injection nozzles 33-36 have been set so that flow volume Q₁ of the fuel injected from injection nozzle 33 toward the foregoing spark plug 9 (fuel injection flow q₁) is less than the flow volume Q₂, the fuel injections from injection nozzles 34-36 (fuel injection flow q₂) (Q₁ < Q₂) (to wit, the surface of the injection nozzle 33 > the total surface of injection openings 34-36).

Also, in the present embodiment, when the injection fuel flow q₁ directed toward the spark plug 9 arrives at this spark plug 9, then the combustion chamber S formed on one hand by the piston 3, as shown by the broken line in Figure 2, and on the other hand by the cylinder head 8, is divided into two zones, one on the spark plug side which includes the foregoing injection nozzles 34-36 and the other on the side opposite the spark plug. The combustion chamber S is configured so that volume V₁ on the spark plug side of the chamber is less than the volume V₂ on the opposite side, i.e. (V₁ < V₂).

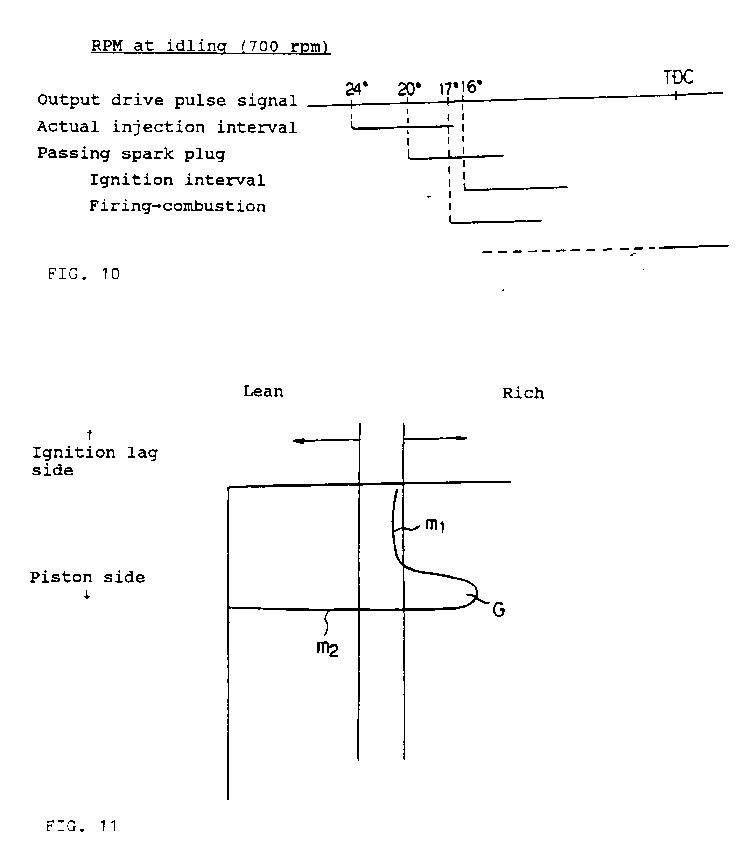

However, as shown in Figure 9, the foregoing second fuel injection valve 32 consists of two injection nozzles 37, 38 aligned at an angle θ₃, and the spark plug 9 is positioned on the bisector of the angle θ₃. Therefore, during fuel injection, fuel from the injection nozzles 37, 38 is made to collide in order both to create a mist and to disperse said fuel within the cylinder 2a as it advances toward the spark plug 9.

Next, the overall operation of the fuel control device will be described with reference to Figure 1. In Figure 1, components corresponding to those appearing in Figures 2 through 5 are denoted by the same reference numbers, and further explanation of them will be omitted.

In Figure 1, 39 is the air intake opening for the foregoing air intake manifold 18, and arrow "a" shows the direction of the air flow from said air intake opening 39. The arrow "b" represents the flow of exhaust gases emitted from the two-cycle engine 1.

The rotational force from the crankshaft 4 of the two-cycle engine 1 is transmitted to an external load 44 by means of an output shaft 40, gears 41, 42 and an input shaft 43, but there is also a measuring gear 45 attached to the end of the crankshaft 4 which is used for the detection of the engine rpm and crank angle. The teeth of the foregoing measuring gear 45 display standard crank angles.

Also in Figure 1, 46 represents a fuel supply device which supplies fuel at a constant pressure to the above mentioned first fuel injection valve 31 and to the second fuel injection valve 32. 47 is an ignition timing device which controls the ignition of the foregoing spark plug 9; 48 is a rpm sensor which doubles as a crank angle sensor; said rpm sensor 48 is situated adjacent to the above mentioned measuring gear 45.

Said fuel control device also includes an engine control unit (ECU) 49. This engine control unit 49 controls the air volume control unit 17 (motor 26 (sub-valve 21 aperture)), the first and second fuel injection valves 31, 32 (the fuel injection timing and volume), and the ignition timing control unit 47 (ignition timing) based upon the input signals of engine rpm and crank angle from the above mentioned rpm sensor 48, and further based upon the main valve 20 and sub-valve 21 apertures (especially the aperture of the main valve 20, to wit, the engine load) by means of the foregoing potentiometers 24 and 25 in the other operational ranges (the mid- and high rpm and mid- and high load ranges), it also implements premixed combustion.

Next, the general operation of the two-cycle engine will be described.

As shown in Figure 2, when the piston 3 is at the lower dead point, the primary scavenging ports 10, 11 and the auxiliary scavenging ports 12, as well as the exhaust port 13 are open. At this time, the air introduced into the crank chamber 7 from the previous cycle is compressed by the piston 3 and flows into cylinder 2a through the primary scavenging ports 10, 11 and the auxiliary scavenging port 12. The residual exhaust gases inside the cylinder 2a are pushed out of the cylinder 2a through the exhaust port 13 to complete the scavenging operation.

Next, as the piston 3 begins ascending inside the cylinder 2a from the lower dead point, first the main scavenging ports 10, 11, and then the auxiliary scavenging port 12 are closed by the piston 3 so that the air introduced into the cylinder 2a is compressed during a compression stroke. However in lower load operating ranges when there is but little displacement of the accelerator, and following the foregoing scavenging process and during the compression stroke, the first fuel injection valve 31 performs a localized injection of fuel.

To wit, as illustrated in Figure 10, the above mentioned engine control unit 49 issues a drive pulse to the first fuel injection valve 31 for the crank angle beginning at 24° before top dead center (BTDC), with the actual fuel injection beginning at 20° BTDC. As described above, the fuel from nozzle 33 of the first fuel injection valve 31 is sprayed toward the spark plug 9, while the other nozzles 34-36 direct the fuel to the intermediate space between the spark plug 9 and piston 3.

The ignition timing for the spark plug 9 begins at 17° BTDC, and the fuel flow volume q₁ reaches the vicinity of the spark plug 9 at a crank angle of 16°.

Accordingly, just before the fuel injection flow q₁ reaches the spark plug 9 (BTDC 9°), the spark generation begins from spark plug 9.

At this point, the fuel injected toward the spark plug 9 has formed a combustible air/fuel mixture (see m₁ in Figure 11) and since the amount of fuel is constrained, a flame is immediately generated by the spark from the spark plug 9, without any problems from an overly rich air/fuel mixture and without any combustion beyond the combustible range.

Since the amount of fuel Q₂ injected in the intermediate range is greater than the amount of fuel Q₁ injected toward spark plug 9 (Q₂ > Q₁), the intermediate range contains an overly rich air/fuel mixture (see G in Figure 11).

Naturally, the combustible air fuel mixture in the vicinity of the spark plug 9 is burned as previously described, but the flame kernel from that combustion serves to heat and vaporize a greater volume of fuel beyond it, that fuel which is inside the intermediate range between spark plug 9 and piston 3.

This vaporized fuel then takes in the surrounding oxygen to form a combustible air/fuel mixture, and next this combustible air/fuel mixture is burned and the fuel beyond the flame is heated and vaporized, whereupon it again takes in the surrounding oxygen to form a combustible air fuel mixture and this process will repeat. Since the fuel directed toward the intermediate range is burned slowly and at low temperatures, a stable stratified combustion is generated and NOₓ exhaust emissions are thereby inhibited.

In addition, this fuel directed toward the intermediate zone is compressed due to the previous combustion and dispersed to the side of the combustion chamber S opposite the spark plug, where it consecutively forms a combustible air fuel mixture and is burned. However, in this embodiment, as previously described, the volume of the side of the combustion chamber S that is opposite the spark plug V₂, is greater than the volume V₁ on the spark plug side (V₂ > V₁), hence the ignition of the combustible gas mixture proceeds slowly and gradually to produce a stable stratified combustion in the low rpm, low load operating ranges.

Further, since the fuel on the piston 3 side does not exceed the m₂ value indicated in Figure 11, no dispersion of excess fuel outside the combustion range takes place, and the generation of unburned gases is inhibited, the amount of HC in the exhaust gases being limited, and fuel economy being improved.

Figure 10 is a timing chart for the fuel injection during stratified combustion; Figure 11 is a graph showing the distribution of air/fuel concentrations inside the cylinder.

On the other hand, when the engine load is above a certain value in the mid- to high operating range, fuel injection is initiated by the first and second fuel injection valves 31, 32 during the scavenging process, and the injection is completed prior to the compression stroke so that the fuel is sufficiently dispersed inside the cylinder 2a to create a combustible air/fuel mixture. Then, when the piston 3 nears the upper dead point, the spark from spark plug 9 causes the combustion of the combustible air/fuel mixture inside the combustion chamber in a process called premixed combustion.

Here, the ascent of the piston 3 causes a negative pressure inside the crank chamber 7, and thereby air enters the crank chamber 7 through the air intake manifold 18, the air volume control device 17, the air intake pipe 16 and the reed valve 15.

Then, due to the explosive force of combustion of the air/fuel mixture in the combustion chamber S, piston 3 passes the upper dead point and descends, causing the air inside crank chamber 7 to be compressed by the piston. This compressed air is then supplied to the next scavenging and air/fuel mixing cycle. Thereupon, when the piston 3 nears the lower dead point, the exhaust port 13 is first opened so that the exhaust gases created from the combustion of the air/fuel mixture are expelled through exhaust port 13. Continuing thereafter, the primary scavenging ports 10, 11 and auxiliary scavenging port 12 perform the above described scavenging action by inflows from these ports into the cylinder 2a.

After that point, operations similar to those described above are repeated to keep the two-cycle engine 1 running.

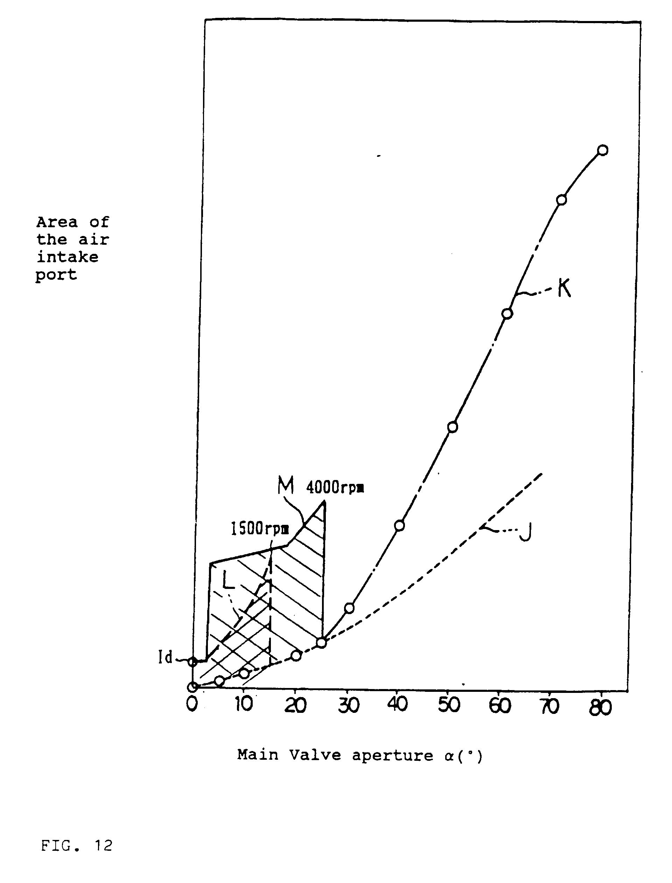

Next, the operation of the fuel control device will be described based on Figures 5 and 12. Figure 12 is a figure showing the change in aperture surface for the air intake port 20a as a function of the aperture α of the main valve 20 (engine load).

When the two-cycle engine 1 is stopped, the main valve 20 and sub-valve 21 are both in a fully closed condition. When idling, the engine control unit 49 provides a control signal to the drive motor 26, causing the sub-valve 21 to open to the required aperture as shown by the double-dot line in Figure 5, the valve moving in the direction shown by the arrow.

Accordingly, when the engine 1 is idling (main valve aperture α = 0) the area of the aperture of the air intake port is the value shown at point ID (the surface of the aperture of air intake port 21a); but air is introduced through an idle port (not shown) and through the sub-valve 21, wherefrom it passes through the reed valve 15 and the air introduction inlet 14 to enter the crank chamber 7. This structure causes a larger volume of air to be introduced into the cylinder 2a during idling than was introduced using conventional designs, as a result of which the scavenging efficiency during idling is improved.

In Figure 12, the broken line J is the aperture area of the air intake port 20a of the main valve 20, while the single-dashed line K indicates the total aperture surface for the air intake ports 20a, 21a of both valves 20, 21. In addition, the broken line L shows the changes in aperture surface for the air intake port 21a of the sub-valve 21 when the engine is held at a steady 1500 rpm, while the solid line M shows the change in aperture area for air intake port 21a of the sub-valve 21 when the engine is held at a steady 4000 rpm.

Also, when the accelerator pedal is but slightly depressed, the throttle wire 29 in the accelerator device causes the first pivoting member 27 to rotate, and, since the rotational angle of the main valve 20 is small, the potentiometer 24 detects the main valve 20 aperture α to be less than the set value α₀ (this value of α₀ changes according to engine rpm) so that in the low load range (α < α₀) the engine control unit 49 does not control the drive for the sub-valve 21 by means of the linkrod 30, but rather it controls the drive for the motor 26 which rotates the sub-valve in the direction of the arrow in Figure 5 to the position shown by the solid line. In addition, control is exercised over the first fuel injection valve 31 and the igniting timing control device 47 in order to achieve stratified combustion of the air/fuel mixture inside the combustion chamber S.

Accordingly, when the accelerator pedal of the accelerator device 19 is slowly further depressed while operating under low load operations with stratified combustion being performed, the main valve 20 is gradually opened, but this operation of said main valve 20 is not a direct-drive operation. Rather, the engine control device 49 reads the movement of the main valve 20 (engine load) by means of the potentiometer 24, and based upon the value, performs feedback control over motor 26 by means of potentiometer 25 to bring the aperture to the required value. Then, the drive control by motor 26 opens the sub-valve 21, and the aperture surface of the intake port 21a of said sub-valve 21 increases as shown in Figure 12 for the broken line L (when the engine rpm is 1500) or the solid line M (when the engine rpm is 4000 rpm). Thus, when the engine is operating in the low load range at stratified combustion, large volumes of air enter the cylinder 2a all at once, even if it is air supplied through the sub-valve 21, and such air is used for scavenging, whereby improved scavenging efficiency and exhaust gas properties are realized.

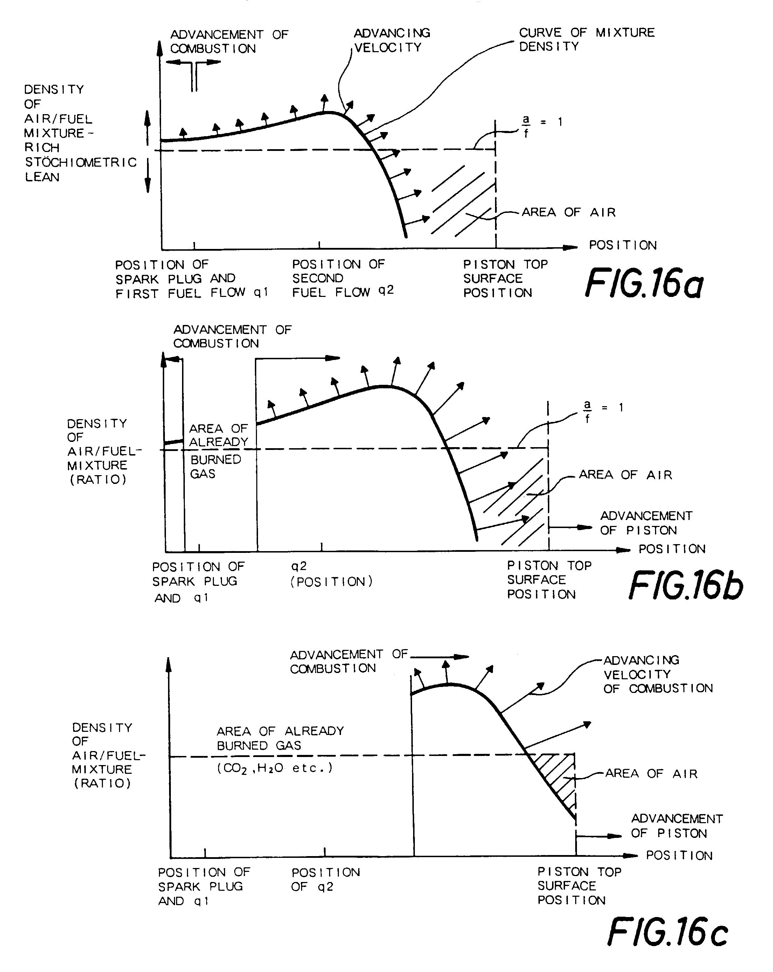

Figure 16a-16c show diagramatically the advancement of combustion in the combustion chamber by means of a curve of mixture density (air/fuel ratio) versus distance (position) of the top surface of the piston with respect to the position of the spark plug. As shown in Figure 16a, close to the upper dead centre position of the piston under low load conditions due to an excessive amount of air being supplied to the combustion chamber a lean air fuel mixture is produced in said combustion chamber and stratified combustion takes place to assure stable running of the engine. Fuel injection into the combustion chamber S simultaneously comprises injecting a smaller amount of a first flow of fuel q₁ towards the spark plug 9 and injecting a greater amount of a second flow of fuel q₂ towards an area between the spark plug 9 and the top surface of the piston 9, thus said second flow of fuel q₂ is more oriented to the piston side end, initially remains in a liquid condition. Upon firing the first flow of fuel q₁ at the position of the spark plug 4 to which the first flow of fuel q₁ is dispersed, an evaporation of the liquid fuel injected as second fuel flow q₂ takes place and assures a stratified combustion in the combustion chamber S. Figures 16b and 16c show the progress of the combustion with the arrows symbolising the different combustion velocity increasing toward the side of the top surface of the piston. The volume V₁ above of a line of injection of the second flow of fuel q₂ is smaller than the volume V₂ beneath a line of injection of the second flow of fuel q₁ and the top surface of the piston, said second flow of fuel q₁ being evaporised by the firing of the first flow of fuel q₁ so as to create a gradient of density of the air/fuel mixture such that the mixture in the V₂ area is lean while the air/fuel mixture is rich in the V₁ area. Thus, a stratified lean mixture combustion with very low emissions can be assured with the appropriate amount of fuel being present at all areas of the combustion chamber S having some excess air closely above the top surface of the piston 3.

Returning to Figure 12, after opening the sub-valve 21 by means of the motor 26 increasing the aperture surface of the intake port 21a of the sub-valve 21, when the aperture α of the main valve 20 reaches the set value α₀ (when the engine rpm is 1500, α₀ is 15°; at 4000 rpm, α₀ is 25°), the engine control unit 49 releases the drive control of motor 26, and the sub-valve 21 is rapidly rotated in the closing direction until contact is made between the end of the guide groove 28a and the end 30b of the connecting rod 30. As a result, as shown in Figure 12, a rapid reduction in the aperture surface of air intake port 21a of sub-valve 21 takes place, and after that, the further depression of the accelerator pedal causes the aperture α of the main valve 20 to increase with the secondary pivoting member 28 being driven by the connecting rod 30 to rotate the first pivoting member 27. This causes the sub-valve 21 and the main valve 20 to rotate open together as a single unit, and the sum of the aperture surface for both air intake ports 20a, 21a of both valves 20, 21 increases along the double-dotted line K shown in Figure 12. In Figure 12, the area shaded by the slanted lines is the zone in which stratified combustion takes place.

Then, under the mid- and high load ranges when the aperture α of the main valve 20 exceeds the set value α₀ (α ≥ α₀), the above described type of premixed combustion is performed. First, when the aperture a of the main valve 20 is less than a certain set value α₁ (>α₀), that is when α < α₁ after the sub-valve 21 has been rapidly closed and before it will open again, similar to the case of low load operating ranges, fuel is injected just from the first fuel injection valve 31, and the ignition timing control device 47 delays the timing compared with the values used during low load operations, so that the fuel becomes adequately dispersed, ignited and burned and thus said air/fuel mixture is ignited and burned in a premixed combustion process.

Thereupon, when the aperture α of the main valve 20 exceeds the foregoing value α₁ (α > α₁), in addition to fuel being provided from both the first fuel injection valve 31 and the second fuel injection valve 32, the ignition timing control device 47 controls the timing to allow adequate fuel dispersion, and the resulting air/fuel mixture is ignited and burned in a premixed combustion process.

### <Example Number 2>

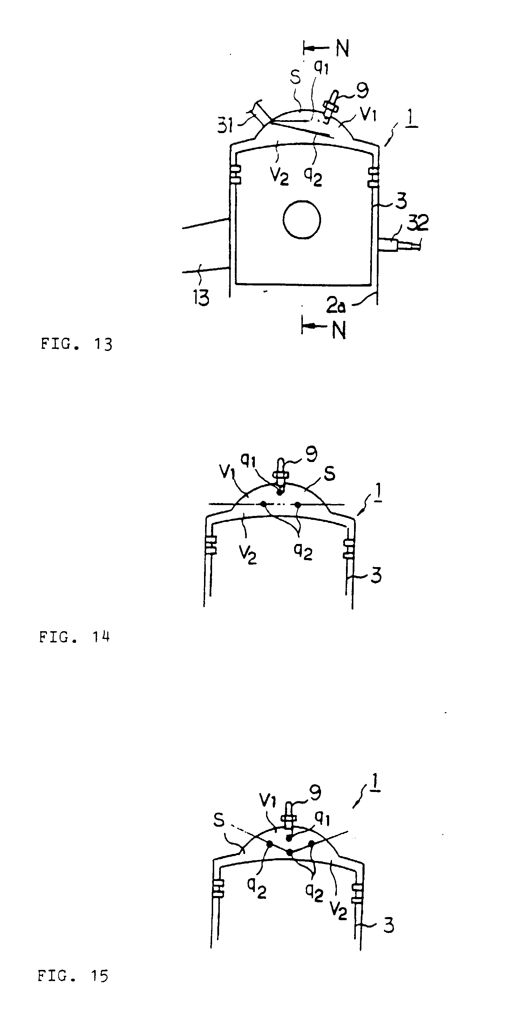

Next a second embodiment of the invention will be described with reference to Figures 13 and 14. Figure 12 is a sectional model of the principal parts of a two-cycle engine involved in the second embodiment, while Figure 14 is a sectional view taken along line N-N of Figure 13. In these figures, the same elements used in the foregoing first embodiment are denoted by the same reference numbers.

In this embodiment, the two-cycle engine 1 comprises a hemispherical shaped combustion chamber S. During low rpm, low load operations, said embodiment mode of the engine 1 also provides one fuel flow q₁ from the first fuel injection valve 31 which is directed toward the spark plug 9, and two fuel injection flows q₂ directed at the intermediate zone between the spark plug 9 and the piston 3 inside the combustion chamber S.

In this embodiment as well, the flow volume Q₁ of the injected fuel flow q₁ is lower than the flow volume Q₂ of the injected fuel flow q₂ (Q₁ < Q₂), and moreover, when the injection fuel flow q₁ directed at the spark plug 9 reaches that spark plug 9, the combustion chamber S, formed between the piston 3 and the cylinder head 8, is divided into two zones, the one on the spark plug side that includes the fuel injection flow q₂ and the other on the opposite side, and the volume V₁ on the spark plug side of combustion chamber S is less than the volume V₂ on the side opposite the spark plug (V₁ < V₂).

Accordingly, the same effects are achieved in this embodiment as in the above described first embodiment.

### <Example Number 3>

Next, a third embodiment of this invention will be described with reference to Figure 15 showing a sectional view (as in Figure 14) of the principal parts of the two-cycle engine in this embodiment.

In this embodiment, when the engine is operating in the low rpm, low load range, the first fuel injection valve 31 directs one fuel injection flow q₁ toward the spark plug 9 in the combustion chamber S, and furthermore three fuel injection flows q₂ to the intermediate zone between the spark plug 9 and the piston 3. However, the embodiment differs from the above described first embodiment in that the three fuel flows q₂ are not injected across a plane.

However, this embodiment also includes a fuel flow Q₁ for the injected fuel flow q₁ which is less than flow Q₂ composed of the injection fuel flows q₂ (Q₁ < Q₂), and moreover, when the fuel injection flow q₂, directed at the spark plug 9, reaches the spark plug 9, the combustion chamber S, formed between the piston 3 and the cylinder head 8 is divided into a spark plug side and a side opposite the spark plug zones by the plane joining the shortest lines connecting the adjacent fuel injection flows q₂, wherein the volume V₁ of the spark plug side of the combustion chamber S is less than the volume V₂ on the side opposite the spark plug (V₁ < V₂)

Thus, this embodiment provides effects similar to those obtained from the above described first embodiment.

### <Example Number 4>

Next, a fourth embodiment of this invention will be explained without reference to Figures. However, the same elements described for the foregoing first embodiment are denoted by the same reference numbers.

The two-cycle engine 1 in this embodiment evinces a bathtub shaped or wedge shaped combustion chamber S. With said engine 1 was well, when operating in low rpm, low load ranges, the first fuel injection valve 31 provides one fuel injection flow q₁ directed toward the spark plug 9 and three upper level fuel injection flows q₂ and two lower level fuel injection flows q₃ to the intermediate zone of the combustion chamber S between the spark plug 9 and the piston 3.

In this embodiment, the flow volume Q₁ from the fuel injection flow q₁ is set to be less than the sum of the fuel injection flows q₂ composing the fuel volume Q₂ plus the fuel injection flows q₃ composing Q₃ (Q₁ < Q₂ < Q₃), and moreover, at the point where the fuel injection flow q₁ reaches the spark plug 9, the combustion chamber S formed by the piston 3 and the cylinder head 8 is divided into two zones, one on the spark plug side and and the other on the opposite side, by a plane F₁ which is subtended by joining all fuel flows except for the fuel injection flow q₁ that are near the fuel injection flow q₁ (fuel injection flows q₂); and the volume V₁ of the combustion chamber S on the spark plug side is less than the volume V₂ on the opposite side (V₁< V₂). However, the fuel flows q₂ composing the fuel volume Q₂ have been set so that Q₂ > (total flow Q - Q₁ -Q₂).

Therefore, in this embodiment as well, effects similar to those obtained in the above described first embodiment are realized. In the case where the flows distant from the fuel flow q₁ fuel flow q₂) are used to divide the combustion chamber on the plane F₂, then it is even better if V₁ < V₂.

This invention embraces the characteristics described below.
1) In addition to allowing positioning the two fuel injection valves 31, 32 shown in Figure 2 on all cylinders of multi-cylinder engines, it is further possible to install only a first fuel injection valve 31 on some of the cylinders, and to utilize the second fuel injection valve 32 on the other cylinders when the loads increase above a certain level. This arrangement would reduce the number of fuel injection valves needed and enable both low and high load operations.
2) In Shunyule type scavenging exhaust systems, the first fuel injection valve may be positioned so that the injection stream directed at the side opposite the exhaust and the side opposite the scavenging port and passes through the upper flow between the spark plug 9 and the exhaust port to divide the cylinder. In this configuration, when the load is above certain levels, the amount of fuel injected from the first fuel injection valve would be increased, to wit, even if the crank angle were increased, there would be no ejection of unburned injected fuel through the exhaust port 13.
3) As shown in Figure 2, the exhaust valve 60 is in a position to be rotated in the clockwise direction during low is aload, low speed operations to delay the exhaust timing. Since the scavenging flow is thereby delayed when the engine rpm are below a certain level, this clockwise rotation of the exhaust valve 60 prevents fuel injected from the second fuel injection valve 32 from being directly expelled through the exhaust port 13.

As explained above, this invention permits the introduction of excessive amounts of air into the cylinder, specifically for directly injected two-cycle engines operating at low engine speed, low load conditions wherein, the injection is performed by a plurality of fuel injection nozzles, at least one of which is directed toward the spark plug, and with the other being directed toward the intermediate zone of the combustion chamber between the spark plug and piston, and wherein the amount of fuel directed toward the above mentioned spark plug is less than the amount directed to the foregoing intermediate zone, thereby accommodating stable stratified combustion, stable exhaust emissions characteristics and improved fuel economy.

Preferrably, in directly injected two-cycle engines where in addition to introducing air into the cylinder 2a during low speed, low load operations, the localized injection is provided from the nozzle of a first fuel injection device, the foregoing first fuel injection valve 31 being equipped with a plurality of nozzles, with at least one nozzle directing a fuel flow q₁ toward the spark plug 9, and the other fuel injection flows q₂ from the other nozzles being directed toward the intermediate zone between the spark plug 9 and piston 3 in the combustion chamber S; and the amount of fuel volume being set so that Q₁, consisting of the foregoing fuel injection flow q₁, is smaller than the foregoing amount of fuel injection Q₂ (Q₁ < Q₂).

Since this invention prevents excess fuel from being scattered to zones beyond the combustion zone, it inhibits the generation of unburned gases and holds down the HC content in the exhaust gases. In addition, because the fuel injection flows q₂ are gradually taking in oxygen and are burned at low temperatures, the invention realizes stable stratified combustion and holds down NOₓ emissions.

## Claims

1. Method for supplying air and injecting fuel into a combustion chamber of an internal combustion engine, in particular two cycle engine, said combustion chamber being defined through a part of a cylinder head supporting a spark plug (9), and a top surface of a piston slidably accommodated in a cylinder bore of a cylinder block, whereby fuel is injected proportionally to load and an excessive amount of air is supplied to said combustion chamber by means of an air intake valve system under at least low load conditions for producing lean air-fuel mixture in said combustion chamber under said condition, **characterised in that** simultaneously to introducing an excessive amount of air during at least low load conditions, a first fuel injection valve (31) performs a localised injection of a first flow of fuel (q₁) towards the spark plug (9) and ignition of an immediately combustible air/fuel-mixture starts ahead of top dead center position of the piston (2), during at least low load conditions a second flow of fuel (q₂) is directed towards an intermediate region between the spark plug (9) and the piston (2) in the combustion chamber (5) while simultaneously said first flow of fuel (q₁) is directed towards the spark plug (9), the amount of fuel (q₁) directed toward the spark plug (9) is smaller than the amount of fuel (q₂) directed towards said intermediate region.

2. Method as claimed in claim 1, **characterised in that** under low load conditions an air introducing subvalve (21) which, at that time is driven by a separate drive means (26) opens to introduce air excessively whereas under increasing load said subvalve (21) is rapidly moved towards its closing direction while simultaneously a main valve (20) gradually opens further and, under further increasing load, said main and subvalves (20, 21) are operated jointly connected by a mechanical linkage (30).

3. Method as claimed in claim 1 or 2, **characterised in that** at a timing the first flow of fuel (q₁) reaches the spark plug (9) a volume (V₁) of the combustion chamber (S) at the side of the spark plug (9) being associated to said flow of fuel (q₁) directed to the spark plug (9) being smaller than a volume (V₂) of the combustion chamber (S) being associated to the second flow of fuel (q₂).

4. Method as claimed in at least one of claims 1 to 3, **characterised in that** under at least low load conditions, while both flows of fuel (q_{1,} q₂) are sprayed and the piston (3) is almost at the top dead centre, the spark plug (9) is ignited.

5. Method as claimed in claim 4, **characterised in that** under middle and high load operating conditions a second fuel injection valve (32) sprays fuel into the combustion chamber fully ahead of the spark timing for forming air and fuel in a premix condition in the combustion chamber (S) at spark timing.

6. Internal combustion engine (1), in particular two cycle engine, having a cylinder block (2) defining at least one cylinder bore (2a) slidably accommodating a piston (3) therein, a cylinder head (8) mounted to the cylinder block (2) and partially defining a combustion chamber (S) together with a top surface of the piston (3), said cylinder head (8) supporting a spark plug (9) for igniting a combustible charge injected into the combustion chamber (S) by a fuel injection means (31), and an air supplying device (14, 15, 16) to supply air in the combustion chamber (S), said fuel injection means (31) has a first fuel injection nozzle (33) for injecting a first flow of fuel (q₁) directed towards the spark plug (9) and at least one further nozzle (34, 35, 36) for simultaneously injecting a second flow of fuel (q₂) directed toward an intermediate region of the combustion chamber (S) between the spark plug (9) and the piston (3), whereby the amount of the first flow of fluid (q₁) is smaller than the amount of the second flow of fuel (q₂), **characterized in that** said fuel injection means (31) comprises a first fuel injection valve (31) attached to a side wall of the cylinder head (9) and is adapted to inject the second flow of fuel (q₂) during at least low load conditions, that said air supply device (14, 15, 16) is adapted to supply an excessive amount of air under at least low load conditions, whereby simultaneously to said excessive supply of air said fuel injection means (31) injects said first flow of fuel (q₁), whereby the ignition of an immediately combustible air/fuel mixture is startable ahead of a top dead center position of said piston (3).

7. Internal combustion engine as claimed in claim 6, **characterised in that** a second fuel injection valve (32) is attached to a side wall of the cylinder block (2).

8. Internal combustion engine as claimed in claim 7, **characterised in that** said second fuel injection valve (32) is adapted to supply air and fuel in a premix condition for middle and high load operating ranges.

9. Internal combustion engine as claimed in claim 7 or 8, **characterised in that** said second fuel injection valve (32) comprises two injection nozzles (37, 38) aligned at an angle (θ₃) rendering the fuel ejected from the two injection nozzles (37, 38) to collide.

10. Internal combustion engine as claimed in claim 9, **characterised in that** the spark plug (9) is aligned to a bisector of said angle of intersection (θ₃) of the two injection nozzles (37, 38).

11. Internal combustion engine as claimed in at least one of claims 6 to 10, **characterised in that** the first fuel injection valve (31) comprises a single fuel injection nozzle (33) of relatively large diameter and three fuel injection nozzles (34, 35, 36) of relatively small diameter.

12. Internal combustion engine as claimed in claim 11, **characterised in that** one of the fuel injection nozzles (35) of smaller diameter is disposed in alignment to an axial centre line of the first fuel injection valve (31) while the two other fuel injection nozzles (34, 36) of said fuel injection nozzle (35) of small diameter are disposed on either side of said centrally disposed fuel injection nozzle (35) under an even angle of inclination (θ₂).

13. Internal combustion engine as claimed in claim 12, **characterised in that** said three fuel injection nozzles (34, 35, 36) are directed towards the intermediate region of the combustion chamber (S).

14. Internal combustion engine as claimed in claim 12 or 13, **characterised in that** the three fuel injection nozzles of smaller diameter (34, 35, 36) are disposed in first plane while said one fuel injection nozzle (33) of larger diameter is disposed in a second plane perpendicular to said first plane and containing said one fuel injection nozzle (33) of larger diameter and said centrally disposed fuel injection nozzle (35) of smaller diameter.

15. Internal combustion engine claimed in at least one of claims 11 to 14, **characterised in that** the single fuel injection nozzle (33) of larger diameter tilts upwards with respect to the centre line of the first fuel injection valve (31) and is directed towards the spark plug (9) to spray the first fuel injection flow (q₁) thereagainst.

16. Internal combustion engine as claimed in at least one of claims 6 to 14, **characterised in that** said first fuel injection valve (31) is adapted to supply fuel primarily for stratified combustion at low load, low speed conditions.

17. Internal combustion engine as claimed in at least one of claims 7 to 10, **characterised in that** the cylinder block (2) has a scavenging port (12) and one exhaust port (3), and said second fuel injection valve (3) is attached at the upper side of the scavenging port (12).

18. Internal combustion engine as claimed in claims 6 to 17, **characterised in that** the air supplying device comprising the scavenging port (12), a crank chamber (7), a reed valve (15), an air intake pipe (16) and an air volume control device (16).

19. Internal combustion engine as claimed in claim 18, **characterised in that** the air volume control device (16) comprises air intake ports (20a, 21a) which are disposed one above the other and which are controlled by main and subvalves (20, 21) respectively, in particular of a butterfly valve type.

20. Internal combustion engine as claimed in claim 19, **characterised in that** the air volume control device (16) comprises a control unit (49) operating the main valve (20) in response to engine speed and receiving a feedback signal from a potentiometer (24) reflecting the opening degree of the main valve (20).

21. Internal combustion engine as claimed in at least one of claims 6 to 20, **characterised in that** the fuel injection means is adapted for two-cycle engines wherein air is introduced into the cylinders when the engine is operating at low load and wherein the fuel is directly injected in localised manner from fuel injection nozzles, wherein said fuel injection means comprises a plurality of such fuel injection nozzles with at least one of them being directed to inject fuel towards the spark plug (9) and the other fuel injection nozzles being directed toward the space between the spark plug (9) and the piston (3) and wherein less fuel is injected toward the spark plug (9) than to the space between the piston (3) and spark plug (9).

22. Internal combustion engine as claimed in claim 21, **characterised in that** there is a plurality of fuel injection nozzles which inject fuel directly to the intermediate space between the spark plug (9) and the piston (3) and that, when the fuel directed towards the spark plug (9) reaches said spark plug (9), the combustion chamber (S) formed by the piston (3) and the cylinder head and enclosing the fuel injection flows from the plurality of fuel injection nozzles, is divided into two areas, wherein the volume of the combustion chamber (S) on the spark plug side being smaller than the volume of the side opposite the spark plug (9).

## Patentansprüche

1. Verfahren zur Zuführung von Luft und zum Einspritzen von Kraftstoff in eine Brennkammer einer Brennkraftmaschine, insbesondere Zweitaktbrennkraftmaschine, wobei die Brennkammer von einem Teil eines Zylinderkopfes, der eine Zündkerze (9) hält, und von einer oberen Oberfläche eines Kolbens gebildet ist, der in einer Zylinderbohrung eines Zylinderblockes gleitend aufgenommen ist, wobei Kraftstoff proportional zur Last eingespritzt und eine Luftüberschußmenge dieser Brennkammer über ein Lufteinlaßventilsystem zumindest zu Niedriglastzuständen zugeführt wird zur Erzeugung eines mageren Luft-Kraftstoff-Gemisches in dieser Brennkammer während dieser Bedingung, **dadurch gekennzeichnet**, daß simultan mit der Zuführung der Luftüberschußmenge zumindest während der Niedriglastbedingungen ein erstes Kraftstoffeinspritzventil (31) die lokalisierte Einspritzung eines ersten Kraftstoffstroms (q₁) in Richtung auf die Zündkerze (9) durchführt und die Zündung eines sofort brennbaren Luft-Kraftstoff-Gemischs vor der oberen Todpunktposition des Kolbens (2) beginnt, daß zumindest unter Niedriglastbedingungen ein zweiter Kraftstoffstrom (q₂) auf einen Zwischenbereich zwischen der Zündkerze (9) und dem Kolben (2) in der Brennkammer (5) gerichtet wird, während gleichzeitig dieser erste Kraftstoffstrom (q₁) auf die Zündkerze (9) zu gerichtet ist, wobei die zu der Zündkerze (9) gerichtete Kraftstoffmenge (q₁) geringer ist als die auf den Zwischenbereich gerichtete Kraftstoffmenge (q₂).

2. Verfahren nach Anspruch 1, **dadurch gekennzeichnet**, daß zu Niedriglastbedingungen ein lufteinleitendes Nebenventil (21), welches zu diesem Zeitpunkt von einer separaten Antriebseinrichtung (26) angetrieben wird, sich öffnet, um Luft im Übermaß einzuleiten, wobei bei ansteigender Last dieses Nebenventil (21) rasch in seine Schließstellung verfahren wird, während simultan ein Hauptventil (20) schrittweise sich weiter öffnet und, bei weiter ansteigender Last, diese Haupt- und Nebenventile (20, 21) über einen mechanischen Anschluß (30) miteinander verbunden betätigt werden.

3. Verfahren nach Anspruch 1 oder 2, **dadurch gekennzeichnet**, daß zu einem Zeitpunkt, zu dem der erste Kraftstoffstrom (q₁) die Zündkerze (9) erreicht, ein Volumen (V₁) der Brennkammer (S) auf der Seite der Zündkerze (9), welches diesem auf die Zündkerze (9) gerichteten Kraftstoffstrom (q₁) zugeordnet ist, kleiner ist als ein Volumen (V₂) der Brennkammer (S), welches dem zweiten Kraftstoffstrom (q₂) zugeordnet ist.

4. Verfahren nach zumindest einem der Ansprüche 1 bis 3, **dadurch gekennzeichnet**, daß zumindest unter Niedriglastbedingungen, während beide Kraftstoffströme (q₁, q₂) ausgesprüht werden und der Kolben (3) sich fast in dem oberen Todpunkt befindet, die Zündkerze (9) gezündet wird.

5. Verfahren nach Anspruch 4, **dadurch gekennzeichnet**, daß unter Mittel- und Hochlastbetriebsbedingungen ein zweites Kraftstoffeinspritzventil (32) in die Brennkammer vollständig vor dem Zündzeitpunkt Kraftstoff einsprüht, um Luft und Kraftstoff in Form einer Vormischung in der Brennkammer (S) zum Zündzeitpunkt zu bilden.

6. Brennkraftmaschine (1), insbesondere Zweitaktbrennkraftmaschine, mit einem Zylinderblock (2), der zumindest eine Zylinderbohrung (2a) festlegt, die darin einen Kolben (3) gleitend aufnimmt, einem Zylinderkopf (8), der an dem Zylinderblock (2) befestigt ist und teilweise zusammen mit einer oberen Oberfläche des Kolbens (3) eine Brennkammer (S) festlegt, wobei dieser Zylinderkopf (8) eine Zündkerze (9) hält zur Zündung einer brennbaren Ladung, die in die Brennkammer (S) mittels einer Kraftstoffeinspritzeinrichtung (31) eingesprüht worden ist, und mit einer Luftzuführungseinrichtung (14, 15, 16) für eine Zuführung von Luft in die Brennkammer (S), wobei die Kraftstoffeinspritzvorrichtung (31) eine erste Kraftstoffeinspritzdüse (33) zum Einsprühen eines ersten Kraftstoffstromes (q₁) aufweist, der auf die Zündkerze (9) gerichtet ist, und zumindest eine weitere Düse (34, 35, 36) aufweist zum simultanen Einsprühen eines zweites Kraftstoffstromes (q₂), der auf einen Zwischenbereich der Brennkammer (S) gerichtet ist, der zwischen der Zündkerze (9) und dem Kolben (3) liegt, wobei die Menge des ersten Kraftstoffstromes (q₁) geringer ist als die Menge des zweiten Kraftstoffstromes (q₂), **dadurch gekennzeichnet**, daß diese Kraftstoffeinspritzeinrichtung (31) ein erstes Kraftstoffeinspritzventil (31) umfaßt, das an einer Seitenwandung des Zylinderkopfes (9) angeschlossen und dazu ausgelegt ist, den zweiten Kraftstoffstrom (q₂) zumindest während Niedriglastbedingungen einzusprühen, daß diese Luftzuführungseinrichtung (14, 15, 16) dazu ausgelegt ist, zumindest unter Niedriglastbedingungen eine Luftüberschußmenge zuzuführen, wobei simultan zu der übermäßigen Zufuhr von Luft diese Kraftstoffeinspritzeinrichtung (31) diesen ersten Kraftstoffstrom (q₁) einsprüht, wobei die Zündung eines sofort brennbaren Luft-Kraftstoff-Gemisches vor der oberen Todpunktposition des Zylinders (3) initiierbar ist.

7. Brennkraftmaschine nach Anspruch 6, **dadurch gekennzeichnet**, daß ein zweites Kraftstoffeinspritzventil (32) an einer Seitenwandung des Zylinderblockes (2) angeschlossen ist.

8. Brennkraftmaschine nach Anspruch 7, **dadurch gekennzeichnet**, daß das zweite Kraftstoffeinspritzventil (32) dazu ausgelegt ist, Luft und Kraftstoff in einem vorgemischten Zustand für Mittel- und Hochlast-Betriebsbedingungsbereiche zuzuführen.

9. Brennkraftmaschine nach Anspruch 7 oder 8, **dadurch gekennzeichnet**, daß das zweite Kraftstoffeinspritzventil (32) zwei Einspritzdüsen (37, 38) umfaßt, die in einem Winkel (θ₃) zueinander derart ausgerichtet sind, so daß die von den zwei Einspritzdüsen (37, 38) ausgestoßenen Kraftstoffströme miteinander kollidieren.

10. Brennkraftmaschine nach Anspruch 9, **dadurch gekennzeichnet**, daß die Zündkerze (9) zu der Winkelhalbierenden dieses Schnittwinkels (θ₃) der zwei Einspritzdüsen (37, 38) ausgerichtet ist.

11. Brennkraftmaschine nach zumindest einem der Ansprüche 6 bis 10, **dadurch gekennzeichnet**, daß das erste Kraftstoffeinspritzventil (31) eine einzelne Kraftstoffeinspritzdüse (33) mit relativ großem Durchmesser und drei Kraftstoffeinspritzdüsen (34, 35, 36) mit relativ geringem Durchmesser aufweist.

12. Brennkraftmaschine nach Anspruch 11, **dadurch gekennzeichnet**, daß eine der Kraftstoffeinspritzdüsen (35) mit geringem Durchmesser auf eine axiale Mittellinie des ersten Kraftstoffeinspritzventils (31) ausgerichtet angeordnet ist, während die zwei anderen Kraftstoffeinspritzdüsen (34, 36) mit geringem Durchmesser von dieser Kraftstoffeinspritzdüse (35) zu beiden Seiten von dieser zentral angeordneten Kraftstoffeinspritzdüse (35) mit einem gleichen Neigungswinkel (θ₂) angeordnet sind.

13. Brennkraftmaschine nach Anspruch 12, **dadurch gekennzeichnet**, daß die drei Kraftstoffeinspritzdüsen (34, 35, 36) auf eine Zwischenregion der Brennkammer (S) gerichtet sind.

14. Brennkraftmaschine nach Anspruch 12 oder 13, **dadurch gekennzeichnet**, daß die drei Kraftstoffeinspritzdüsen (34, 35, 36) mit geringerem Durchmesser in einer ersten Ebene angeordnet sind, während die eine Kraftstoffeinspritzdüse (33) mit größerem Durchmesser in einer zur ersten Ebene senkrechten zweiten Ebene angeordnet ist, die diese eine Kraftstoffeinspritzdüse (33) mit größerem Durchmesser und diese zentral angeordnete Kraftstoffeinspritzdüse (35) mit geringerem Durchmesser enthält.

15. Brennkraftmaschine nach zumindest einem der Ansprüche 11 bis 14, **dadurch gekennzeichnet**, daß die einzelne Kraftstoffeinspritzdüse (33) mit größerem Durchmesser bezüglich der Mittellinie des ersten Kraftstoffeinspritzventils (31) nach oben geneigt und auf die Zündkerze (9) zu ausgerichtet ist, um gegen diese den ersten Kraftstoffeinspritzstrom (q₁) zu sprühen.

16. Brennkraftmaschine nach zumindest einem der Ansprüche 6 bis 14, **dadurch gekennzeichnet**, daß dieses erste Kraftstoffeinspritzventil (31) dazu ausgelegt ist, Kraftstoff primär für eine geschichtete Verbrennung bei Niednglast- und Niedriggeschwindigkeits-Betriebsbedingungen zuzuführen.

17. Brennkraftmaschine nach zumindest einem der Ansprüche 7 bis 10, **dadurch gekennzeichnet**, daß der Zylinderblock (2) eine Spülöffnung (12) und eine Auslaßöffnung (3) aufweist, und daß dieses zweite Kraftstoffeinspritzventil (3) an der oberen Seite der Spülöffnung (12) angeschlossen ist.

18. Brennkraftmaschine nach den Ansprüchen 6 bis 17, **dadurch gekennzeichnet**, daß die Luftzuführungseinrichtung die Spülöffnung (12), eine Kurbelkammer (7), ein Klappenventil (15), einen Lufteinlaßkanal (16) und eine Luftvolumensteuereinrichtung (16) umfaßt.

19. Brennkraftmaschine nach Anspruch 18, **dadurch gekennzeichnet**, daß die Luftvolumensteuereinrichtung (16) Lufteinlaßöffnungen (20a, 21a) enthält, die eine über der anderen angeordnet sind und von Haupt- bzw. Nebenventilen (20, 21), insbesondere eines Drosselklappentyps, gesteuert werden.

20. Brennkraftmaschine nach Anspruch 19, **dadurch gekennzeichnet**, daß die Luftvolumensteuereinrichtung (16) eine Steuereinheit (49) enthält, die das Hauptventil (20) in Abhängigkeit von der Motorgeschwindigkeit betätigt und von einem Potentiometer (24) ein Rückführsignal empfängt, das den Öffnungsgrad des Hauptventils (20) wiedergibt.

21. Brennkraftmaschine nach zumindest einem der Ansprüche 6 bis 20, **dadurch gekennzeichnet**, daß die Kraftstoffeinspritzeinrichtung für eine Zweitakt-Brennkraftmaschine ausgelegt ist, in welcher Luft in die Zylinder eingeleitet wird, wenn die Brennkraftmaschine bei Niedriglast läuft, und in welcher der Kraftstoff direkt in einer örtlich festgelegten Weise von Kraftstoffeinspritzdüsen eingespritzt wird, in welcher diese Kraftstoffeinspritzeinrichtung eine Vielzahl derartiger Kraftstoffeinspritzdüsen enthält, wobei zumindest eine von diesen ausgerichtet ist, um Kraftstoff auf die Zündkerze (9) zu einzuspritzen, und die anderen Kraftstoffeinspritzdüsen auf den Raum zwischen der Zündkerze (9) und dem Kolben (3) gerichtet sind, und in welcher auf die Zündkerze (9) zu weniger Kraftstoff eingespritzt wird, als in den Raum zwischen dem Kolben (3) und der Zündkerze (9).

22. Brennkraftmaschine nach Anspruch 21, **dadurch gekennzeichnet**, daß eine Vielzahl von Kraftstoffeinspritzdüsen vorhanden ist, die Kraftstoff direkt in den Zwischenraum zwischen der Zündkerze (9) und dem Kolben (3) einspritzen und daß, wenn der auf die Zündkerze (9) gerichtete Kraftstoff diese Zündkerze (9) erreicht, die von dem Kolben (3) und dem Zylinderkopf gebildete Brennkammer (S), die die Kraftstoffeinspritzströme von der Vielzahl von Kraftstoffeinspritzdüsen einschließt, in zwei Bereiche aufgeteilt ist, wobei das Volumen der Brennkammer (S) auf der Seite der Zündkerze geringer ist als das Volumen auf der der Zündkerze (9) abgewandten Seite.

## Revendications

1. Procédé d'alimentation en air et d'injection de carburant dans une chambre de combustion d'un moteur à combustion interne, notamment un moteur à deux temps, ladite chambre de combustion étant définie à travers une partie d'une tête de cylindre supportant une bougie (9), et une surface supérieure d'un piston logé, pour coulisser, dans un alésage cylindrique d'un bloc de culasse, grâce auquel le carburant est injecté proportionnellement à la charge et une quantité excessive d'air est alimentée dans ladite chambre de combustion au moyen d'un système de soupape d'admission d'air dans des conditions de faible charge, au moins, afin de produire un mélange pauvre air-carburant dans ladite chambre de combustion, dans lesdites conditions, caractérisé en ce que, en même temps que l'introduction d'une quantité excessive d'air dans des conditions de faible charge, au moins, une première soupape d'injection de carburant (31) effectue une injection localisée d'un premier flux de carburant (q₁) en direction de la bougie (9), et l'allumage d'un mélange air/carburant immédiatement combustible commence en avant de la position de point mort haut du piston (2), dans des conditions de faible charge, au moins, un second flux de carburant (q₂) est dirigé vers une zone intermédiaire entre la bougie (9) et le piston (2) dans la chambre de combustion (5) alors que, en même temps, ledit premier flux de carburant (q₁) est dirigé vers la bougie (9), la quantité de carburant (q₁) dirigée vers la bougie (9) est plus faible que la quantité de carburant (q₂) dirigée vers ladite zone intermédiaire.

2. Procédé selon la revendication 1, caractérisé en ce que, dans des conditions de faible charge, une soupape annexe d'introduction d'air (21) qui, à ce moment, est entraînée par un moyen d'entraînement séparé (26) s'ouvre pour introduire de l'air en excès, alors que, avec une charge qui augmente, ladite soupape annexe (21) se déplace rapidement dans son sens de fermeture alors que, en même temps, une soupape principale (20) s'ouvre progressivement et, avec une charge qui augmente, lesdites soupapes annexes et soupapes principales (20, 21) fonctionnent et sont raccordées par un raccord mécanique (30).

3. Procédé selon la revendication 1 ou 2, caractérisé en ce que, à un moment donné, le premier flux de carburant (q₁) atteint la bougie (9), un volume (V₁) de la chambre de combustion (S) sur le côté de la bougie (9) étant associé audit flux de carburant (q₁) dirigé vers la bougie (9) et étant plus faible qu'un volume (V₂) de la chambre de combustion (S) associé au second flux de carburant (q₂).

4. Procédé selon l'une au moins des revendications 1 à 3, caractérisé en ce que, dans des conditions de faible charge, au moins, l'allumage se produit à la bougie (9) lorsque les deux flux de carburant (q₁, q₂) sont vaporisés et que le piston (3) se trouve presque au point mort haut.

5. Procédé selon la revendication 4, caractérisé en ce que dans des conditions de fonctionnement élevées ou moyennes, une seconde soupape d'injection de carburant (32) vaporise du carburant dans la chambre de combustion bien avant le moment de la formation de l'étincelle pour former un état de prémélange d'air et de carburant dans la chambre de combustion (S) au moment où se produit l'étincelle.

6. Moteur à combustion interne (1), en particulier moteur à deux temps, présentant un bloc de culasse (2) définissant au moins un alésage cylindrique (2a) logeant, pour qu'il puisse coulisser, un piston (3), une tête de cylindre (8) montée sur le bloc de culasse (2), et définissant partiellement une chambre de combustion (S) avec une surface supérieure du piston (3), ladite tête de cylindre (8) supportant une bougie (9) pour allumer une charge combustible injectée dans la chambre de combustion (S) grâce à un moyen d'injection de carburant (31), et un dispositif d'alimentation en air (14, 15, 16) pour alimenter la chambre de combustion (S) en air, ledit moyen d'injection de carburant (31) présente une première tuyère d'injection de carburant (33) pour injecter un premier flux de carburant (q₁) dirigé vers la bougie (9) et au moins une autre tuyère (34, 35, 36) pour injecter simultanément un second flux de carburant (q₂) dirigé vers une zone intermédiaire de la chambre de combustion (S) entre la bougie (9) et le piston (3), grâce à quoi la quantité du premier flux de fluide (q₁) est plus faible que la quantité du second flux de fluide (q₂), caractérisé en ce que ledit moyen d'injection de carburant (31) comprend une première soupape d'injection de carburant (31) fixée sur une paroi latérale de la tête de cylindre (8) et conçue pour injecter le second flux de carburant (q₂) dans des conditions de faible charge, au moins, en ce que ledit dispositif d'alimentation en air (14, 15, 16) est conçu pour alimenter une quantité excessive d'air dans des conditions de faible charge, au moins, grâce à quoi, simultanément à ladite fourniture en excès d'air, ledit moyen d'injection de carburant (31) injecte ledit premier flux de carburant (q₁), grâce à quoi l'allumage d'un mélange air/carburant immédiatement combustible peut commencer à l'avant d'une position de point mort haut dudit piston (3).

7. Moteur à combustion interne selon la revendication 6, caractérisé en ce qu'une seconde soupape d'injection de carburant (32) est fixée à une paroi latérale du bloc de cylindre (2).

8. Moteur à combustion interne selon la revendication 7, caractérisé en ce que ladite seconde soupape d'injection de carburant (32) est conçue pour fournir de l'air et du carburant dans un état de prémélange pour des gammes de fonctionnement de charge élevée ou moyenne.

9. Moteur à combustion interne selon la revendication 7 ou 8, caractérisé en ce que ladite seconde soupape d'injection de carburant (32) comprend deux tuyères d'injection (37, 38) alignées selon un angle (θ₃), ce qui provoque la collision des deux flux de carburant éjectés par les deux tuyères d'injection (37, 38).

10. Moteur à combustion interne selon la revendication 9, caractérisé en ce que la bougie (9) est alignée selon une bissectrice dudit angle d'intersection (θ₃) des deux tuyères d'injection (37, 38).

11. Moteur à combustion interne selon au moins l'une des revendications 6 à 10, caractérisé en ce que la première soupape d'injection de carburant (31) comprend une seule tuyère d'injection de carburant (33) ayant un diamètre relativement grand et trois tuyères d'injection de carburant (34, 35, 36) ayant un diamètre relativement petit.

12. Moteur à combustion interne selon la revendication 11, caractérisé en ce que l'une des tuyères d'injection de carburant (35) ayant un diamètre plus petit est disposée en alignement avec une ligne axiale centrale de la première soupape d'injection de carburant (31) tandis que les deux autres tuyères d'injection de carburant (34, 36) de ladite tuyère d'injection de carburant (35) ayant un petit diamètre sont disposées des deux côtés de ladite tuyère d'injection de carburant disposée au centre (35) selon un angle égal d'inclinaison (θ₂).

13. Moteur à combustion interne selon la revendication 12, caractérisé en ce que lesdites trois tuyères d'injection de carburant (34, 35, 36) sont dirigées vers la zone intermédiaire de la chambre de combustion (S).

14. Moteur à combustion interne selon les revendications 12 ou 13, caractérisé en ce que les trois tuyères d'injection de carburant de plus petit diamètre (34, 35, 36) sont disposées dans un premier plan alors que ladite une seule tuyère d'injection de carburant (33) de plus grand diamètre est disposée dans un second plan perpendiculaire audit premier plan et contenant ladite une seule tuyère d'injection de carburant (33) de plus grand diamètre et ladite tuyère d'injection de carburant disposée au centre (35) ayant un diamètre plus petit.

15. Moteur à combustion interne selon l'une au moins des revendications 11 à 14, caractérisé en ce que la une seule tuyère d'injection de carburant (33) de plus grand diamètre bascule vers le haut par rapport à la ligne centrale de la première soupape d'injection de carburant (31) et est dirigée vers la bougie (9) pour vaporiser le premier flux d'injection de carburant (q₁) contre celle-ci.

16. Moteur à combustion interne selon l'une au moins des revendications 6 à 14, caractérisé en ce que ladite première soupape d'injection de carburant (31) est conçue pour fournir principalement du carburant pour une combustion stratifiée, dans des conditions de charge faible et de faible vitesse.

17. Moteur à combustion interne selon l'une au moins des revendications 7 à 10, caractérisé en ce que le bloc de culasse (2) présente une lumière d'admission (12) et un orifice d'échappement (3), et en ce que ladite seconde soupape d'injection de carburant (3) est fixée sur le côté supérieur de la lumière d'admission (12).

18. Moteur à combustion interne selon les revendications 6 à 17, caractérisé en ce que le dispositif d'alimentation en air comprend la lumière d'admission (12), une chambre de bielle (7), une soupape à anche (15), un tuyau d'admission d'air (16) et un dispositif de réglage du volume d'air (16).

19. Moteur à combustion interne selon la revendication 18, caractérisé en ce que le dispositif de réglage du volume d'air (16) comprend des orifices d'admission d'air (20a, 21a) qui sont disposés l'un au-dessus de l'autre et qui sont commandés par des soupapes principales et soupapes annexes (20, 21), respectivement, plus particulièrement du type papillon.

20. Moteur à combustion interne selon la revendication 19, caractérisé en ce que le dispositif de réglage de volume d'air (16) comprend une unité de réglage (49) actionnant la soupape principale (20) en réponse à la vitesse du moteur et recevant un signal de retour émis par un potentiomètre (24) reflétant le degré d'ouverture de la soupape principale (20).

21. Moteur à combustion interne selon l'une au moins des revendications 6 à 20, caractérisé en ce que le moyen d'injection de carburant est conçu pour des moteurs à deux cycles dans lesquels l'air est introduit dans les cylindres lorsque le moteur fonctionne à basse charge et dans lesquels le carburant est directement injecté de manière localisée à partir des tuyères d'injection de carburant, dans lequel ledit moyen d'injection de carburant comprend une pluralité de telles tuyères d'injection de carburant, dont une au moins est dirigée pour injecter le carburant vers la bougie (9), les autres tuyères d'injection de carburant étant dirigées vers l'espace qui sépare la bougie (9) et le piston (3), et dans lequel moins de carburant est injecté vers la bougie (9) que vers l'espace qui sépare le piston (3) et la bougie (9).

22. Moteur à combustion interne selon la revendication 21, caractérisé en ce qu'il existe une pluralité de tuyères d'injection de carburant qui injectent le carburant directement vers l'espace intermédiaire qui sépare la bougie (9) et le piston (3) et en ce que, lorsque le carburant dirigé vers la bougie (9) atteint ladite bougie (9), la chambre de combustion (S) formée par le piston (3) et la tête de cylindre, et enserrant les flux d'injection de carburant à partir de la pluralité de tuyères d'injection de carburant, est divisée en deux zones, dans lesquelles le volume de la chambre de combustion (S) du côté de la bougie est plus petit que le volume du côté opposé à la bougie (9).
